# EUROPEAN PATENT SPECIFICATION

(11) **EP 2 068 687 B1**
(45) Date of publication and mention of the grant of the patent: **17.11.2010**
(21) Application number: 07794291.0
(22) Date of filing: 18.06.2007
(51) Int. Cl.: A47J 37/07

(54) **EASY TO START HEATING APPARATUS AT ANY ATTEMPT WITHOUT NEED FOR FLAMMABLE FLUID AND BLOWING**
IMMER LEICHT ZU STARTENDE ERWÄRMUNGSVORRICHTUNG OHNE ERFORDERNIS EINER ERWÄRMUNGSFLÜSSIGKEIT ODER EINER BLASANLAGE
APPAREIL DE CHAUFFAGE FACILE À ALLUMER À CHAQUE TENTATIVE SANS L'AIDE DE FLUIDE INFLAMMABLE ET SANS AVOIR À SOUFFLER

(30) Priority: 03.10.2006 SE 0602065
(43) Date of publication of application: 17.06.2009
(73) Proprietor: Gokturk, Ramadan, 16110 Bursa (TR)
(72) Inventor: Gokturk, Ramadan, 16110 Bursa (TR)
(74) Representative: Iskender, Ibrahim
(86) International application number: PCT/TR2007/000051
(87) International publication number: WO 2008/041958

(56) References cited:
- EP-A- 0 824 886
- DE-U1- 8 526 502
- DE-U1- 29 909 415
- US-A- 5 086 752

## Description

### The Related Art

The invention relates to a grill heating apparatus presenting the problems arising from related art during brazier and barbecue.

The invention particularly relates to less cost, environment/friendly, high efficient grill heating apparatus which can be used in open areas such as gardens and terraces as well as for cooking units specially designed for restaurants by means of locating in the stoves or cooking units, without need for flammable liquid and blowing.

### Background of the Related Art

Today great amount of brazier coal, to burn the coal flammable fluid such as thinner, bushes, papers, wood etc. are needed to have barbeque. First of all, papers, bushes and small size wood are located into the body of the grill. Then; they are burned by help of a lighter, match etc. Brazier coal is located on the burned papers, bushes, wood etc. A long time is required for obtaining ember form of brazier coal. In order to burn and help ember of the coal one person has to blow it continuously, which causes loss of times and great amount of effort by the person.

Since blowing required for ember of the coal takes long time, more environment hazard gases such as carbon monoxide and carbon dioxide gases are caused.

In conclusion, in order to eliminate the above mentioned problems and disadvantages it is needed to develop less cost, environment/friendly, high efficient grill heating apparatus which can be used in open areas such as gardens and terraces as well as for cooking units specialty designed for restaurants by means of locating in the stoves or cooking units, without need for flammable liquid and blowing and thus it has been necessary to make a development in the related art, exemplified for instance by EP 0 824 886 A1.

### Purpose of the Invention

From the known status of the related art, the purpose of the invention is to develop a less cost, environment/friendly, high efficient grill heating apparatus which can be used in open areas such as gardens and terraces as well as for cooking units specially designed for restaurants by means of locating in the stoves or cooking units, without need for flammable liquid and blowing.

Another purpose of the invention is to develop at heating apparatus where start of burning is easy without need for flammable fluid and blowing.

Another purpose of the invention is to help the coal become ember within 3-5 minutes from burning process by help of provided air circulation. When compared to conventional braziers, obtaining ember is considerably high.

Another purpose of the invention is to provide an environment-friendly heating apparatus as it uses less brazier coal and wood which causes environmental pollution when burned. Thus, emission of hazardous gasses such as carbon dioxide and carbon monoxide is reduced.

A further purpose of the invention is to prevent use of flammable fluids and blowing during cooking and thus prevent adverse impacts of hazardous gasses on the food so as to provide healthy cooking.

The embodiment of the invention, the characteristic features and all advantages will be more clearly understood with the figure given below and detailed descriptions made with reference to the said figures, and therefore, the assessment should be made taking into consideration the said figures and detailed description.

### Description of Figures

- Figure 1:: Shows perspective view of the heating apparatus when located in the cooking unit.
- Figure 2:: Shows the view of heating apparatus located in cooking unit in demounted position.
- Figure 3:: Shows the perspective view of the heating apparatus located in stove.
- Figure 4:: Shows the view of heating apparatus located in stove in demounted position.
- Figure 5:: Shows perspective view of the heat distributor and support body located in a different stove.
- Figure 6:: Shows view of demounted status of heat distributor indicated in Figure 5.
- Figure 7a:: Shows upper view of an alternative example of a heat distributor.
- Figure 7b:: Shows bottom view of the heat distributor indicated in Figure 7a.
- Figure 7c:: Shows side view of the heat distributor shown in Figure 7a.
- Figure 7d:: Shows perspective view of the heat distributor shown in Figure 7a.
- Figure 7e:: Shows perspective view of the support body where the heat distributor shown in figure 7a is located
- Figure 8:: Shows view of an alternative embodiment of the heating apparatus in demounted position.
- Figure 9:: Shows view of an alternative embodiment of the heating apparatus in demounted position.
- Figure 10:: Shows perspective view of heat distributor containing circular table
- Figure 11:: Shows perspective view of heat distributor containing circular table from a different angle.
- Figure 12:: Shows side view of heat distributor in the position when used to cook food.

### Reference numbers

- 1.: Support body
- 1.1: Mounting space
- 1.2: Contact point
- 2.: Air chamber
- 2.1: Cover
- 2.2: Ventilation hole
- 2.3: Lock arm
- 3.: Heat distributor
- 3.1: Burning chamber
- 3.2: Table
- 3.2.1: Hot air hole
- 3.2.2: Curved part
- 4.: Flame circulation space
- 5.: Grill
- 6.: Chimney
- 6.1: Handle
- 6.2: Smoke exit hole
- 6.3: Solid fuel discharge chamber
- 7.: Solid fuel
- 8.: Stove/cooking unit
- 8.1: Air passage duct
- 8.2: Heating surfaces
- 8.3: Gas discharge pipe
- 8.4: Cooking chamber
- 8.5: Heat holding chamber
- 8.6: Hot air circulation
- 9.: Feet
- 10.: Air collection part
- 11.: Fixing bulge
- 12.: Fixing bars
- 13.: Pots
- 13.1: Hot air passage space
- 13.2: Hand hold
- 13.3: Handle
- 14.: Oven
- 14.1: Smoke discharge pipe

### Detailed Description of the Invention

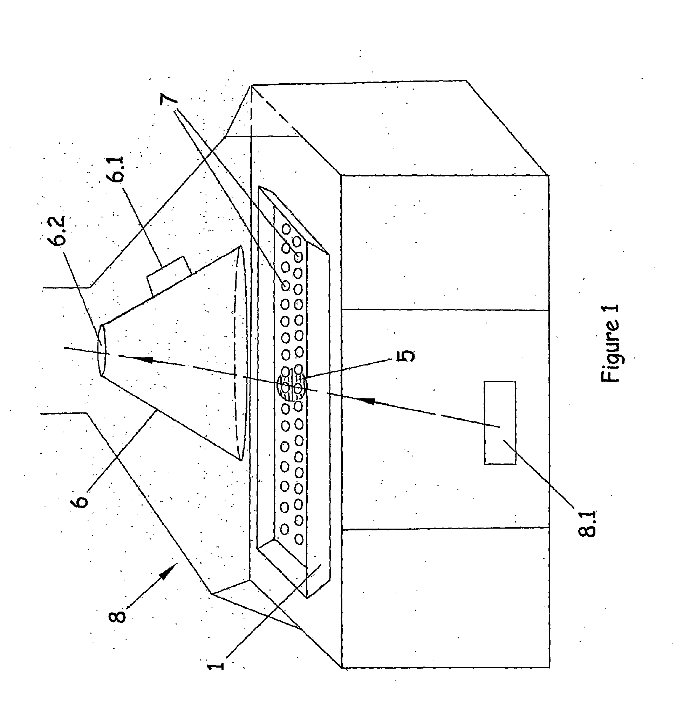

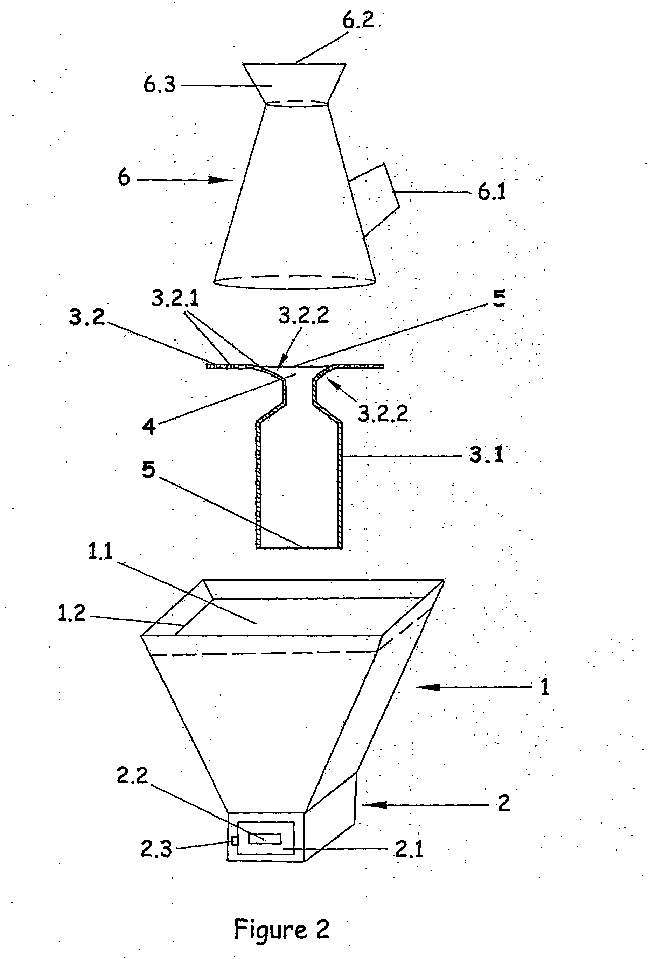

Figure 1 shows perspective view of the heating apparatus when located in the cooking unit (8). Figure 2 shows the view of heating apparatus located in cooking unit (8) in demounted position consisting of heat distributor (3), chimney (6), air chamber (2) and support body (1). Heat distributor (3) consists of one burning chamber (3.1) and one table (3.2) in form of rectangular prism connected to upper part of the chamber (3.1) with welding. Table (3.2) contains hot air holes (3.2.1) providing heat transfer. The part of the table (3.2) connected to upper part of the burning chamber (3.1) has been designed in a curved part (3.2.2) containing hot air holes (3.2.1.). A flame circulation space (4) is formed between upper surface of the burning chamber (3.1) and table (3.2) by means of curved part (3.2.2). Flame circulation is provided by means of this space (4) and ember of the solid fuel (7) on the grill (5) is provided in a short time.

Heat distributor (3) is located into mounting space (1.1) formed inside the support body (1). Heat distributor (3) is located inside the support body (1) in a manner providing contacts with predetermined height of contact point (1.2) on the support body (1) of the table (3.2) edges. After heater distributor (3) is mounted inside the support body (1), a certain height difference occurs between support body (1) base and burning chamber (3.1) base.

Support body (1) has an air chamber (2) on the bottom. Air chamber comprises a cover (2.1) opened and closed by means of a lock arm (2.3) and a ventilation hole (2.2) located on the cover (2.1). Air chamber (2) is also the compartment where ashes of paper and wood pieces burned inside burning chamber (3.1) are stored.

Paper and small pieces of wood are located side by side in crossed manner inside the burning chamber (3.1) located inside the support body (1). Then, the cover (2.1) located under the support body (1) is opened by means of lock arm (2.3) and papers and pieces of wood in the burning chamber (3.1) are burned. After burning the papers and pieces of wood in the burning chamber (3.1), the cover (2.1) is closed. The air inletting through air passage duct (8.1) on the cooking unit (8) passes through ventilation hole (2.2) located on the cover (2.1) and is filled into inner part of the support body (1) continuously. The air filled in inner part of the support body (1) is heated by means of warm emitted from lateral surfaces of burning chamber (3.1) and passes through air holes (3.2.1) located on the table (3.2) and ember is provided. The air passing through hot air holes (3.2.1) located on the curved part (3.2.2) provides hot air circulation between the grill (5) comprised of metal bars having solid fuel (7) and upper surface of the burning chamber (3.1). Thus, burning efficiency is increased and solid fuel becomes ember in a short time period without need for blowing.

Solid fuel such as brazier coal etc. (7) is located in the space between upper surface edges of the support body (1) of rectangular section and table (3.2). Then, the grill where the food to be cooked are located is positioned on the upper edges of the support body (1). The smoke arising from the burning its discharged to outside environment by means of a chimney (6). Upper surface of the chimney (6) which is in conic shape having space on bottom, and upper surface contains a smoke exit hole (6.2). For carrying the chimney, a handle (6.1) has been provided on the chimney (6). The upper part of the chimney (6) contains a solid fuel discharge chamber (6.3) having a conic entrance widening upward in order to facilitate supply of solid fuel (7) into heating apparatus. The chimney (6) provides functions of solid fuel supply and reinforcing air extraction.

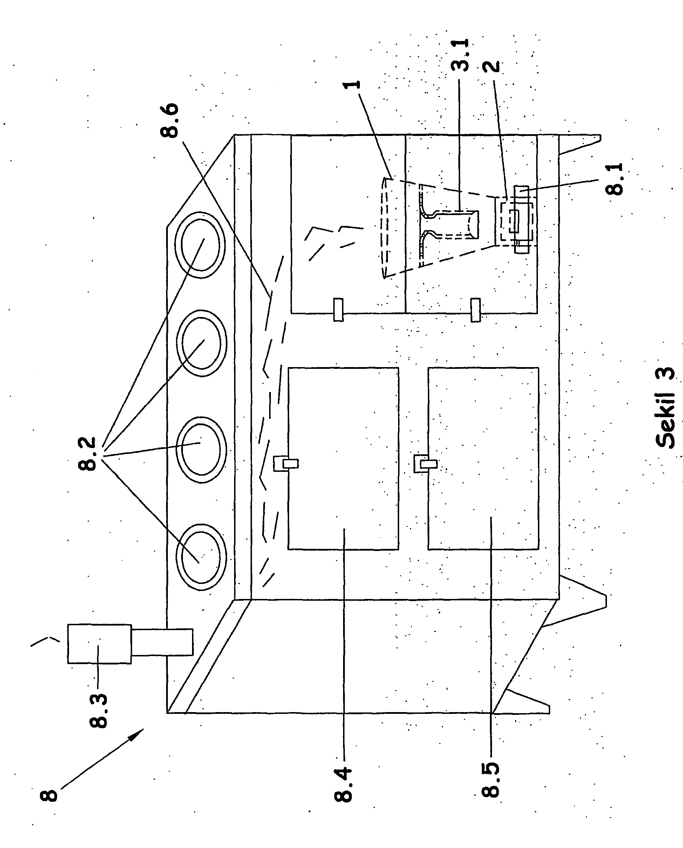

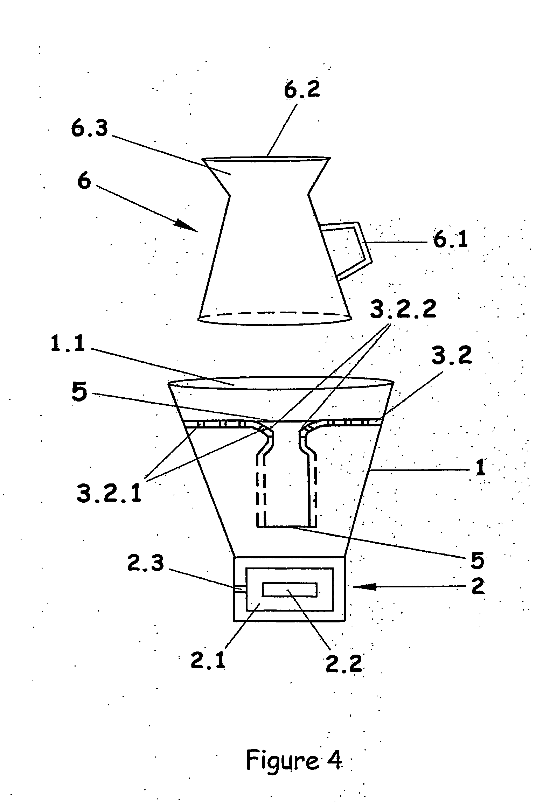

Figure 3 shows the perspective view of the heating apparatus located in stove (8). As seen in Figure 4, circular support body (3.2) has a conic shape. Accordingly, table (3.2) of the heat distributor (3) has circular shape. Similarly, support body (1) and heat distributor (3) located in the support body (1) is located in a stove (8) frequently used at homes. The air from air passage ducts on the stove (8) passes through the ventilation hole (2.2) of the air chamber (2) located in lower part of the support body (1) and is filled in the support body (1). Then, this air is heated by means of heat emitted from burning chamber (3.1) and heats and turns into ember the solid fuels such as coal etc. on the table via hot air holes (3.2.1). Hot air emitted from heat distributor (3) moves upward and heats the heating surfaces (8.2) on the stove (8). Pots etc. on the heating surfaces (8.2) can be heated. The gasses and smokes arising from the burning are discharged to outside by means of a gas discharge pipe (8.3). Furthermore, the food in pots etc. located in the heating chamber are cooked by means of high temperature occurred in cooking chamber (8.4) by hot air circulation (8.6) provided by heat distributor (3). Hot keeping chamber (8.5) heated less than cooking, chamber (8.4) keeps food in heated containers hot without loss of heating. Thus, the heating of both the environment where stove (8) is located and cooking of the food is provided simultaneously.

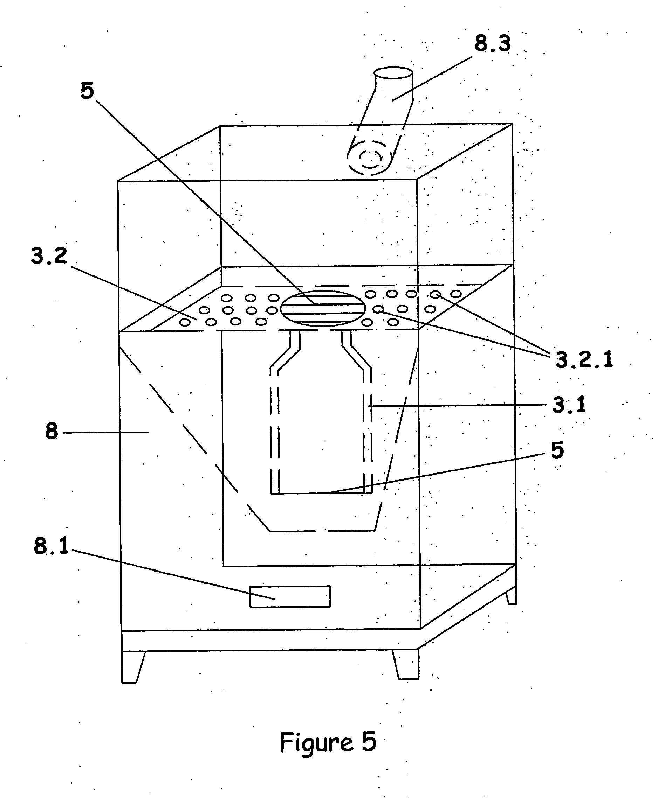

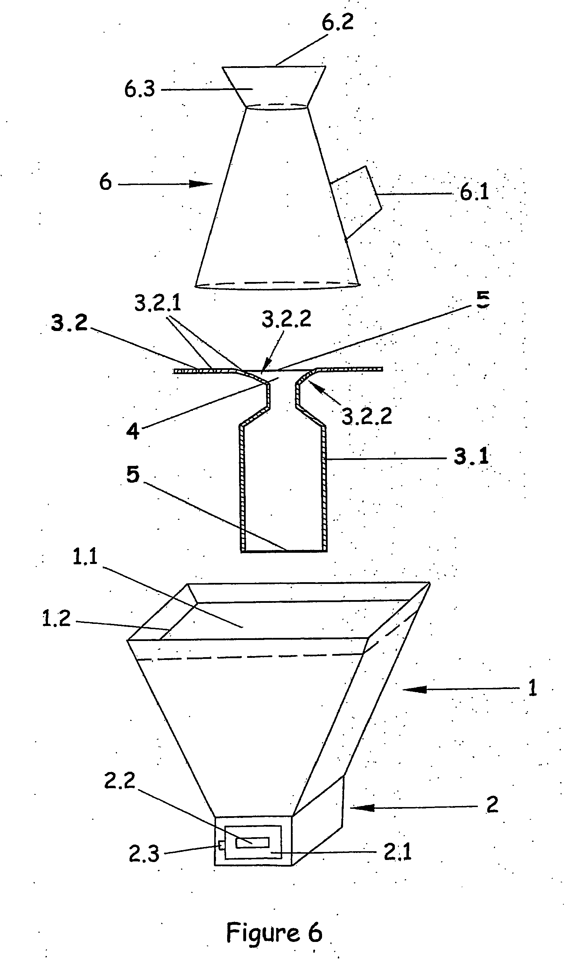

Figure 5 shows perspective view of the heat distributor (3) inside the support body (1) located in a different stove (8). As seen from figure 6, support body (1) is of a circular shape; accordingly, the.table (3.2) located in the support body (1) is also or circular shape. Medium part of the circular table (3.2) has 6 grill (5) consisting of metal bars. Solid fuels such as coal etc. are located on grill (5) and hot air holes (3.2.1). An efficient burning is obtained by means of flame circulation occurring in the flame circulation space (4) of the heat distributor (3), and ember of the coal on the table (3.2) is provided quickly without need for blowing. The smoke arising out of burning is discharged by means of a gas discharge pipe (8.3).

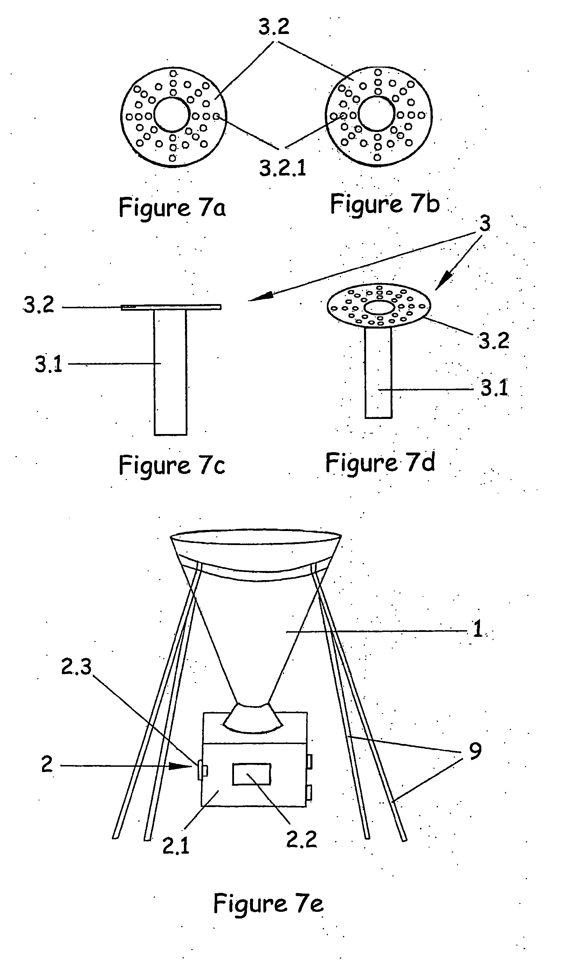

Figure 7a, 7b, 7c and 7d show an alternative example of a heat distributor (3) from different perspective angles. As seen from the figures, heat distributor (3) contains a burning chamber (3.1) in the form of empty cylindrical form and a flat table (3.2) in circular form. Table (3.2) contains hot air holes (3.2.1). In this alternative example, no curved part (3.2.2) has been provided on joining point of burning chamber (3.1) and table (3.2). This example does not form part of the claimed invention.

Figure 7e shows perspective view of the support body (1) wherein heat distributor (3) is located. Support body (1) is in the form of funnel. Lower part of the support body (1) contains an air chamber (2). This part (2) comprises a cover (2.1) which can be opened and closed by means of a lock arm (2.3), and a ventilation hole (2.2) located on this cover (2.1). The papers and wood pieces in the burning chamber (3.1) are burned by means of opening the cover (2.1). The support body (1) stands on the ground by help of the feet (9).

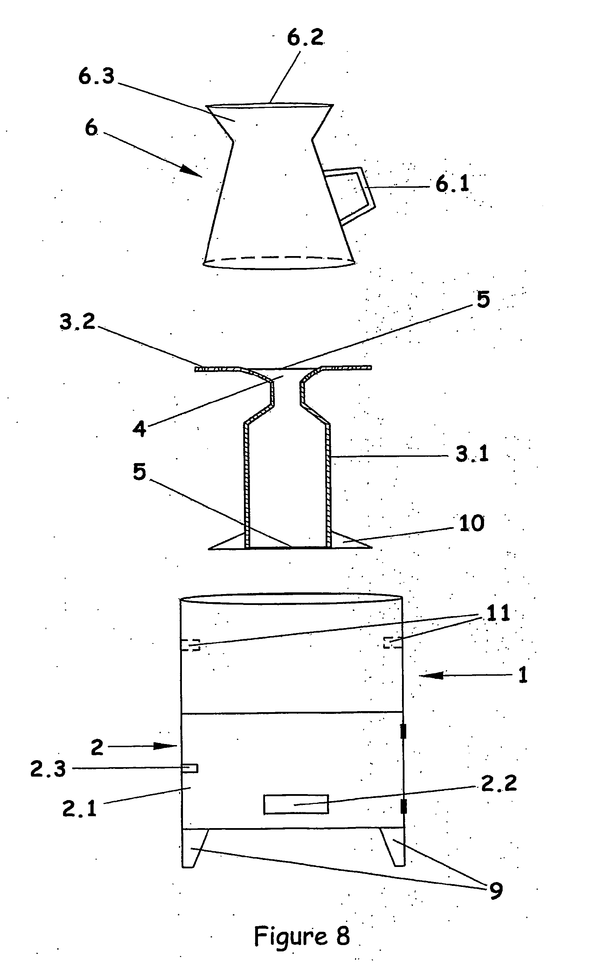

Figure 8 shows view of an alternative embodiment of the heating apparatus which can be used in areas such as terrace and gardens. In this embodiment, the support body (1) and air chamber (2) are of integral form. Air chamber (2) is located under the support body (1). There is a ventilation hole (2.2) on the air chamber (2). A fixing bulge (11) has been formed on the inner diameter of support body (1) having empty cylindrical form along the diameter. The table (3.2) sits on the fixing part (11) and support body (1) can be fixed within any desired height

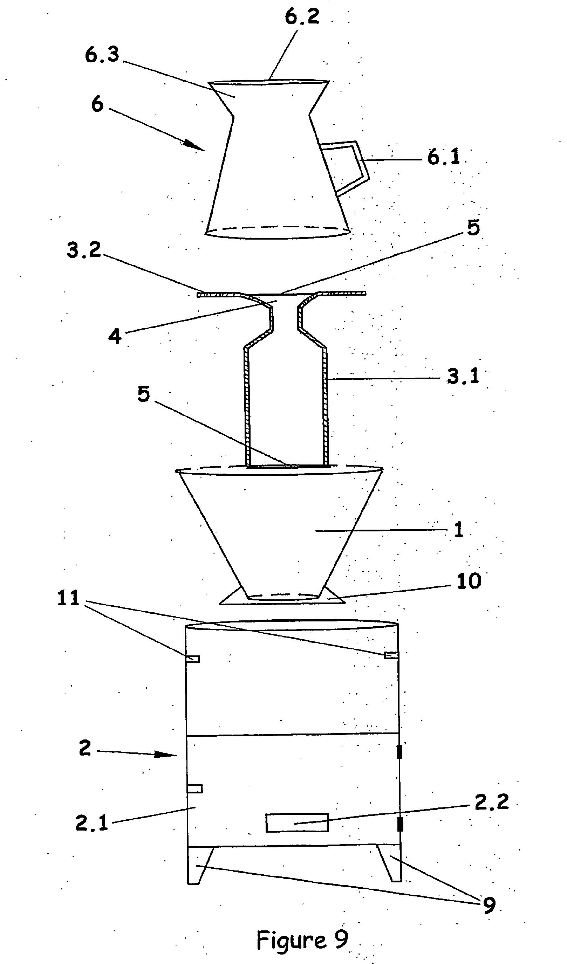

Figure 9 shows an alternative embodiment. In this embodiment, the difference from the embodiment shown in Figure 8 is that, after the heat distributor (3) is located into a support body (1) of a downward narrowing conic structure, it is located in an air chamber having a ventilation hole (2.2) and a cover (2.1) that can be opened and closed. The support body (1) of conic structure which has empty space in upper and lower parts sits on the fixing bulge (111) and thus support body 81) can be provided at desired height. The amount of air entering into the Support body (1) is increased by means of air collection part (10) formed on the lower part of the support body (1). Heating apparatus can stand on feet (9) in grounds of gardens, terraces etc.

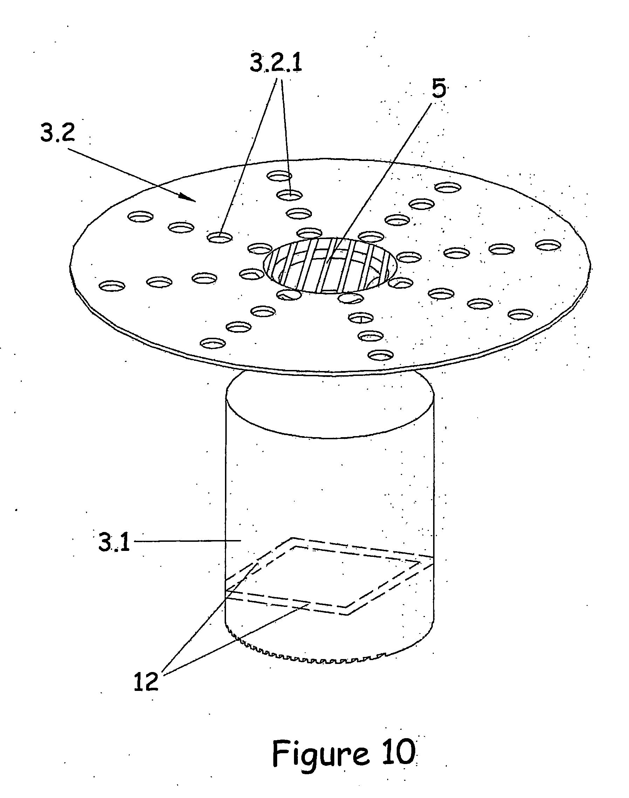

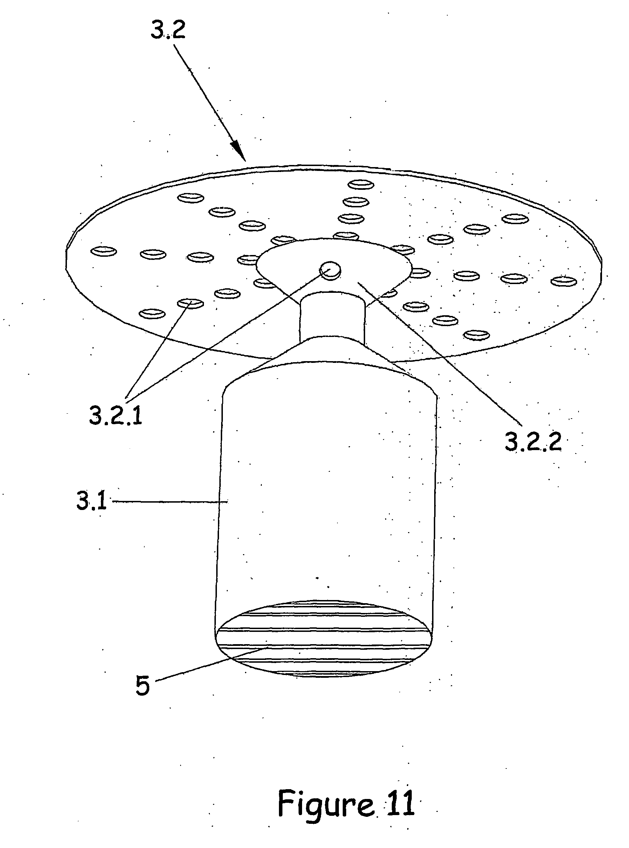

Figure 10 and Figure 11 shows perspective views of heat distributor (3) containing circular table (3.2) from different view angles. As can be seen from the figures the heat distributor (3) comprises a burning chamber (3.1) of a cylindrical structure, a circular table (3.2) connected to upper part of the burning chamber (3.1) by means of welding. The part where circular table (3.2) is connected to the burning chamber (3.1) is formed as curved part (3.2.2). Table (3.2) and curved part (3.2.2) contain hot air holes (3.2.1.). Lower part of the burning chamber (3.1) contains a grill (5) consisting of iron bars. Ashes of paper and wood pieces in the burning chamber (3.1) fall down from this grill (5) and are filled in the air chamber (2) also serving as ash holder. In order to be able to position the wood pieces in cross-section and straight form in the burning chamber (3.1), fixing bars (12) have been welded on 4-5 cm above the grill (5) and inner part of the burning chamber (3.1).

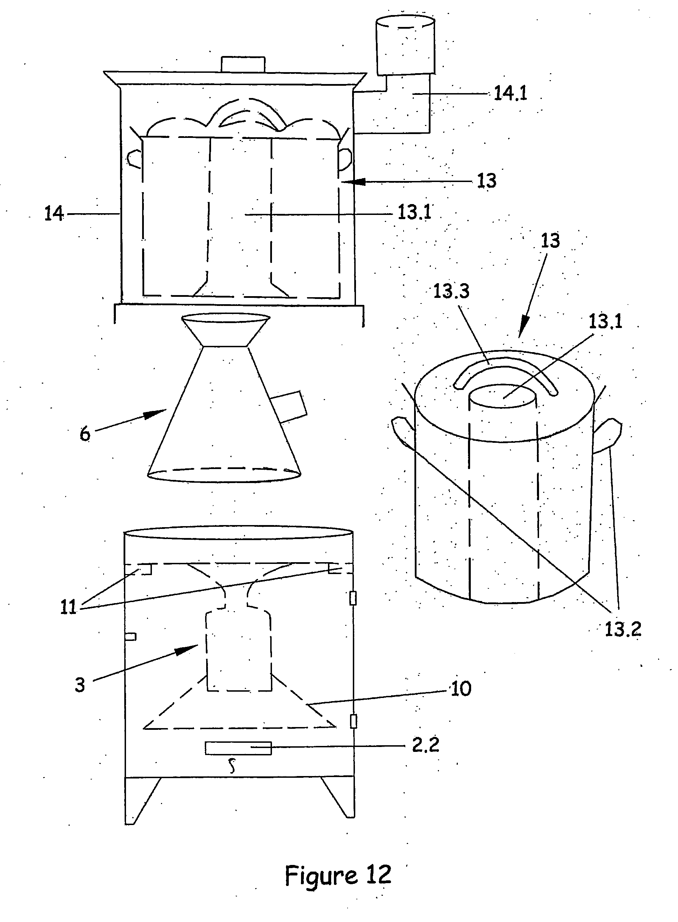

As seen from Figure 12, chimney (6) is taken down from the heat distributor (3), after the solid fuel on the heat distributor (3) which is located on the fixing bulges (11) inside the support body (1) become ember. Burning chamber (3.1) located under the heat distributor (3) contains an air collection part (10) which accumulates the air from outside environment and passing through ventilation hole (2.2). Then the pot (13) inside the oven is located on the upper part of the support body (1) together with oven (14). Centre of the pot (13) contains a hot air passage space (13.1) in order to facilitate and accelerate the cooking process. The hot air obtained from the fuel in ember form on the heat distributor (3) passes through hot air passage space (13.1) and provides cooking, of the food. The cover on the pot (13) can be opened and closed by means of a handle (13.3). In addition, the pot (13) has hand holders (13.2) on sides for carrying the pot (13). The smoke from the pot (13) is discharged from the oven (14) into outside environment via a smoke discharge pipe (14.1).

The invention cannot be limited to the representative applications given in thins section. Alternative embodiments to be developed by persons skilled in the field based on basic factors under protection as specified in claims as well as alternative embodiments described above shall mean violation of the invention.

## Claims

1. A heating apparatus comprising a heat distributor (3) containing a burning chamber (3.1) wherein solid fuels are located and a table (3.2) containing hot air holes (3.2.1), located on burning chamber (3.1), the part of said table (3.2) joining the upper end of the said burning chamber (3.1) is formed as curved part (3.2.2) containing hot air holes (3.2.1) and a support body (1) containing a mounting space (1.1) where the said heat distributor (3) is located, which can be used in open areas such as gardens and terraces solely as well as inside stoves (8) or cooking units (8) specially designed for restaurants, which provides burning easily without need for flammable fluid and blowing, it is **characterized in that** it comprises
- a grill (5) is located on the said curved part (3.2.2), consisting of metal bars where coal is located,
- a flame circulation space (4) provided between upper surface of the said burning chamber (3.1) and grill (5) located onto the said curved part (3.2.2).

2. A heating apparatus according to claim 6 and it is **characterized in that** it comprises fixing bulge (11) formed inside the said support body (1) in order to fix the said burning chamber (3.1) at a certain height.

3. A heating apparatus according to claim 1 and it is **characterized in that** it comprises an air chamber (2) located on the lower part of the said support body (1).

4. A heating apparatus according to claim 1 and it is **characterized in that** the said air chamber (2) comprises a cover (2.1) which can be opened and closed by means of a lock arm (2.3) and a ventilation hole (2.2) provided on the said cover (2.1).

5. A heating apparatus according to any of the previous claims and it is **characterized in that** the air entering into the said support body (1) from the said ventilation hole (2.2) is heated by the heat emitted from the said burning chamber (3.1) surfaces, that the heated air passes through the said hot air holes (3.2.1) on the said table (3.2) and the said curved part (3.2.2) and thus a hot air circulation increasing the burning efficiency continuously is provided.

6. A heating apparatus according to any of the previous claims and it is **characterized in that** solid fuel (7) is located in the space between upper surface edges of the said support body (1) and the said table (3.2).

7. A heating apparatus according to any of the previous claims and it is **characterized in that** it comprises a chimney (6) containing a handle (6.1) and a smoke exit hole (6.2) located on the said table (3.2) and through which the smoke arising out of the burning is discharged to outside environment.

8. A heating apparatus according to any of the previous claims and it is **characterized in that** a solid fuel discharge chamber (6.3) in the conic form narrowing downward is provided in upper part of the said chimney (6) in order to facilitate discharge of solid fuel (7) into heating apparatus.

9. A heating apparatus according to any of the previous claims and it is **characterized in that** it comprises fixing bars (12) welded into inner part of the burning chamber (3.1) and upper part of the grill (5) located in lower part of the burning chamber (3.1) in order to position the wood pieces in cross and straight position in the burning chamber (3.1).

10. A stove/cooking unit (8) containing at least one air passage duct (8.1), wherein said heating apparatus consist of air chamber (2), support body (1) and heat distributor (3), according to any of the previous claims, is located.

## Patentansprüche

1. Eine Kocheinheit bestehend aus einem Wärmeverteiler (3) mit einer Brennkammer (3.1), in der sich feste Brennstoffe befinden, und einem Tisch (3.2), der über Heißluftlöcher (3.2.1) auf der Brennkammer (3.1) verfügt. Der genannte Tisch (3.2) stößt am oberen Ende gegen die genannte Brennkammer (3.1), ist als gebogenes Teil (3.2.2) ausgeführt und enthält Heißluftlöcher (3.2.1) und einen Stützkörper (1) an dem sich eine Montagefläche (1.1) für den genannten Wärmeverteiler (3) befindet, um im Freigelände wie Gärten und Terrassen allein sowie als Innenofen (8) oder Kocheinheit (8) speziell für Restaurants verwendet werden zu können, die ein einfaches Brennen ohne den Einsatz von entzündlichen Flüssigkeiten oder Gebläsen ermöglicht. Er hat folgende Bestandteile:
- ein Grill (5), der sich auf dem genannten gebogenen Teil (3.2.2) befindet, bestehend aus Metallstäben über der Kohle,
- eine Flammenzirkulationskammer (4) zwischen der Oberfläche der genannten Brennkammer (3.1) und dem Grill (5), die sich auf dem genannten gebogenen Teil (3.2.2) befindet.

2. Eine Kocheinheit gemäß Forderung 6, diese wird charakterisiert **dadurch**, dass sie über eine Befestigungsverdickung (11) innerhalb des genannten Stützkörpers (1) zur Befestigung der genannten Brennkammer (3.1) auf einer bestimmten Höhe verfügt.

3. Eine Kocheinheit gemäß Forderung 1, diese wird charakterisiert **dadurch**, dass sie über eine Luftkammer (2) im unteren Teil des genannten Stützkörpers (1) verfügt.

4. Eine Kocheinheit gemäß Forderung 1, diese wird charakterisiert **dadurch**, dass in der genannten Luftkammer (2) eine Abdeckung (2.1) vorhanden ist, die mithilfe einer Verriegelungsstange (2.3) geschlossen werden kann und mit einem Belüftungsloch (2.2) in der genannten Abdeckung (2.1) ausgestattet ist.

5. Eine Kocheinheit entsprechend einer der vorherigen Forderungen und charakterisiert **dadurch**, dass die durch das genannte Belüftungsloch (2.2) in den Stützkörper (1) eindringe Luft von den Oberflächen der genannten Brennkammer (3.1) erwärmt wird. Diese erwärmte Luft strömt durch die genannten Luftlöcher (3.2.1) auf dem genannten Tisch (3.2) und das genannte gebogene Teil (3.2.2); die so hervorgerufene Zirkulation der heißen Luft erhöht die dauerhafte Brenneffizienz.

6. Eine Kocheinheit entsprechend einer der vorherigen Forderungen und charakterisiert **dadurch**, dass sich die Festbrennstoffe (7) in dem Raum zwischen der oberen Oberflächenkante des genannten Stützkörpers (1) und dem genannten Tisch (3.2) befindet.

7. Eine Kocheinheit entsprechend einer der vorherigen Forderungen und charakterisiert **dadurch**, dass sie über einen Kamin (6) mit Griff (6.1) und mit einem Loch zum Rauchabgang (6.2) am genannten Tisch (3.2) verfügt, durch den der durch die Verbrennung entstehende Rauch in die Umgebung abgegeben wird.

8. Eine Kocheinheit entsprechend einer der vorherigen Forderungen und charakterisiert **dadurch**, dass sich eine Festbrennstoff-Entladekammer (6.3) in konischer Form nach unten spitz werdend im oberen Bereich des genannten Kamins (6) befindet, um die Entladung von Festbrennstoffen (7) in die Kocheinheit zu erleichtern.

9. Eine Kocheinheit entsprechend einer der vorherigen Forderungen und charakterisiert **dadurch**, dass sie über Fixierungsschienen (12) verfügt, die am inneren Teil der Brennkammer (3.1) und am oberen Teil des Grills (5) im unteren Bereich der Brennkammer (3.1) fest geschweißt sind, um die Positionierung der Holzstücke in Kreuz- und Querrichtung mit der Brennkammer (3.1) zu ermöglichen.

10. Eine Ofen-/Kocheinheit (8) bestehend aus mindestens einem Lüftungsrohr (8.1), wobei die genannte Kocheinheit aus Luftkammer (2), Stützkörper (1) und Wärmeverteiler (3) entsprechend der obigen Forderungen besteht.

## Revendications

1. Un appareil de chauffage comportant un diffuseur de chaleur (3) contenant une chambre de combustion (3.1) dans laquelle sont placés des combustibles solides et un plateau (3.2) contenant des trous d'air chaud (3.2.1), placé sur la chambre de combustion (3.1), la partie dudit plateau (3.2) joignant la partie supérieure de ladite chambre de combustion (3.1) est conçue comme pièce courbe (3.2.2) contenant des trous d'air chaud (3.2.1) et un corps de support (1) contenant un espace de montage (1.1) où ledit diffuseur de chaleur (3) est placé, qui peut être utilisé dans des milieux ouverts tels des jardins et des terrasses uniquement ainsi que des cuisinières intérieures (8) ou des unités de cuisson (8) conçues spécialement pour les restaurants, s'allumant facilement sans l'aide de fluide inflammable et sans avoir à souffler, **caractérisé en ce qu'**il comporte
- un gril (5) situé sur ladite pièce courbe (3.2.2), constitué de barres en métal où se trouve du charbon,
- un espace de circulation de la flamme (4) prévu entre la surface supérieure de ladite chambre de combustion (3.1) et le gril (5) situé sur ladite pièce courbe (3.2.2).

2. Un appareil de chauffage selon la revendication 6 **caractérisé en ce qu'**il comporte une saillie de fixation (11) formée à l'intérieur dudit corps de support (1) de sorte à fixer ladite chambre de combustion (3.1) à une certaine hauteur.

3. Un appareil de chauffage selon la revendication 1 **caractérisé en ce qu'**il comporte une chambre à air (2) située sur la partie inférieure dudit corps de support (1).

4. Un appareil de chauffage selon la revendication 1 **caractérisé en ce que** ladite chambre à air (2) comporte un couvercle (2.1) qui peut être ouvert et fermé au moyen d'un bras de verrouillage (2.3) et un trou d'aération (2.2) placé sur ledit couvercle (2.1).

5. Un appareil de chauffage selon chaque revendication précédente **caractérisé en ce que** l'air pénétrant dans ledit corps de support (1) à partir dudit trou d'aération (2.2) est réchauffé par la chaleur émise à partir des surfaces de ladite chambre de combustion (3.1), que l'air réchauffé passe à travers lesdits trous d'air chaud (3.2.1) sur ledit plateau (3.2) et ladite pièce courbe (3.2.2) et une circulation d'air chaud est par conséquent assurée qui augmente continuellement l'efficacité de combustion.

6. Un appareil de chauffage selon chaque revendication précédente **caractérisé en ce que** le combustible solide (7) est situé dans l'espace se trouvant entre les bords de la surface supérieure dudit corps de support (1) et ledit plateau (3.2).

7. Un appareil de chauffage selon chaque revendication précédente **caractérisé en ce qu'**il comporte une cheminée (6) comprenant une poignée (6.1) et un orifice de sortie de fumée (6.2) situé sur ledit plateau (3.2) et à travers lequel la fumée provenant de la combustion est refoulée vers l'environnement extérieur.

8. Un appareil de chauffage selon chaque revendication précédente **caractérisé en ce qu'**une chambre de refoulement de combustible solide (6.3) de forme conique se rétrécissant vers le bas est placée sur la partie supérieure de ladite cheminée (6) de sorte à faciliter le refoulement de combustible solide (7) dans l'appareil de chauffage.

9. Un appareil de chauffage selon chaque revendication précédente **caractérisé en ce qu'**il comporte des barres de fixation (12) soudées dans la partie intérieure de la chambre de combustion (3.1) et la partie supérieure du gril (5) situées dans la partie inférieure de la chambre de combustion (3.1) de sorte à disposer les morceaux de bois dans une position bien droite dans la chambre de combustion (3.1).

10. Une unité de cuisson / cuisinière (8) comprenant au moins une conduite d'air (8.1), où est situé ledit appareil de chauffage se composant d'une chambre à air (2), d'un corps de support (1) et d'un diffuseur de chaleur (3), selon chacune des revendications précédentes.
